(19) **Europäisches Patentamt**
**European Patent Office**
**Office européen des brevets**

(11) **EP 2 530 391 A1**

(12) **EUROPÄISCHE PATENTANMELDUNG**

(43) Veröffentlichungstag:
**05.12.2012 Patentblatt 2012/49**

(51) Int Cl.:
*F24D 19/10* (2006.01)    *F25B 49/02* (2006.01)
*F25B 30/02* (2006.01)

(21) Anmeldenummer: **11004538.2**

(22) Anmeldetag: **03.06.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Stiebel Eltron GmbH & Co. KG**
**37603 Holzminden (DE)**

(72) Erfinder:
• **Wagner, Enno, Dr.**
**37699 Fürstenberg (DE)**
• **Ott, Sebastian**
**60388 Frankfurt/Main (DE)**
• **Herrs, Martin**
**37671 Höxter (DE)**

(54) **Wärmepumpenvorrichtung sowie Verfahren zum Steuern einer Wärmepumpenvorrichtung**

(57) Es wird eine Wärmepumpenvorrichtung mit einem Verdichter (V) mit mindestens zwei Drehzahleinstellungen und einem Regler (R) zum Einstellen der Drehzahleinstellungen des Verdichters (V) vorgesehen. Der Regler (R) weist eine Kennfeldeinheit (KFE) auf, welche die jeweilige Leistung der Wärmepumpenvorrichtung (WP) bei den zumindest zwei Drehzahleinstellungen des Verdichters (V) für verschiedene Außentemperaturen ($T_{amb}$) und für verschiedene Wärmepumpentemperaturen ($T_{WPm}$) speichert. Der Regler (R) weist eine Abschätzungseinheit (AE) zum Abschätzen des Wärmebedarfs ($Q_{WB}$) eines zu beheizenden Gebäudes auf. Der Regler (R) ist dazu ausgestaltet, den durch die Abschätzungseinheit (AE) abgeschätzten Wärmebedarf ($Q_{wB}$) mit den der aktuellen Außentemperatur ($T_{amb}$) und der aktuellen Wärmepumpentemperatur ($T_{WPm}$) für verschiedene Drehzahleinstellungen des Verdichters (V) zugeordneten Wärmepumpenleistungen zu vergleichen und diejenige Wärmepumpenleistung und die dazugehörige Drehzahleinstellung auszuwählen, welche dem abgeschätzten Wärmebedarf ($Q_{WB}$) am meisten entspricht. Der Regler (R) ist ferner dazu ausgestaltet, die Drehzahleinstellung des Verdichters (V) entsprechend der Auswahl zu steuern.

**Fig. 2**

**Beschreibung**

Die vorliegende Erfindung betrifft eine Wärmepumpenvorrichtung sowie ein Verfahren zum Steuern einer Wärmepumpenvorrichtung.

Wärmepumpen, insbesondere Luft-Wasserwärmepumpen, werden vorzugsweise zur Beheizung von Wohnhäusern eingesetzt. Vor allem in modernen, sehr gut gedämmten Häusern nimmt die erforderliche Heizlast zunehmend ab, so dass Heizgeräte mit mittleren und kleinen Heizleistungen gefragt sind. Hierbei besteht die prinzipielle Problematik darin, dass die Wärmepumpe so dimensioniert sein muss, dass sie auch an kalten Tagen hinreichend Heizleistung zur Verfügung stellen kann. Wärmepumpen mit fester Verdichterdrehzahl liefern jedoch mit steigender Außentemperatur und abnehmender Heizlast des Gebäudes eine zunehmende Heizleistung.

Dieser ungünstige funktionale Zusammenhang wird bei herkömmlichen Wärmepumpen dadurch kompensiert, dass die Wärmepumpe häufig an- und abgeschaltet wird. Dabei werden jedoch vor allem bei mäßig kalten oder milden Außentemperaturen die erforderlichen Heizkreistemperaturen sehr schnell erreicht und überschritten, so dass sich im Mittel eine höhere Vorlauftemperatur einstellt als eigentlich erforderlich wäre. Hohe Vorlauftemperaturen gehen jedoch immer zu Lasten der Leistungszahl, so dass sich im Mittel eine geringere Effizienz einstellt als mit einer Wärmepumpe kleinerer Leistung im gleichen Arbeitspunkt.

Ein weiterer Aspekt betrifft die benötigte Energie für eine Warmwasserbereitstellung durch eine Wärmepumpe. Vor allem im Neubau verlagert sich der Energieeinsatz immer mehr von der Heizenergie in Richtung Warmwasserbereitung. In Einfamilienhäusern werden große Mengen an Warmwasser benötigt, so dass bei kleinen Speichern mit geringem Platzbedarf höhere Speichertemperaturen vorteilhaft sind. Diese wiederum sind mittels herkömmlicher Luft-Wasserwärmepumpen nur mit geringer Leistungszahl zu erreichen.

Es ist eine Aufgabe der vorliegenden Erfindung, eine Wärmepumpenvorrichtung vorzusehen, welche über eine verbesserte Wirtschaftlichkeit verfügt.

Diese Aufgabe wird durch eine Wärmepumpenvorrichtung gemäß Anspruch 1 und ein Verfahren gemäß Anspruch 4 gelöst.

Damit wird eine Wärmepumpenvorrichtung mit einem Verdichter mit mindestens zwei Drehzahleinstellungen und einem Regler zum Einstellen der Drehzahleinstellungen des Verdichters vorgesehen. Der Regler weist eine Kennfeldeinheit auf, welche die jeweilige Leistung der Wärmepumpenvorrichtung bei den zumindest zwei Drehzahleinstellungen des Verdichters für verschiedene Außentemperaturen und für verschiedene Wärmepumpentemperaturen speichert. Der Regler weist eine Abschätzungseinheit zum Abschätzen des Wärmebedarfs eines zu beheizenden Gebäudes auf. Der Regler ist dazu ausgestaltet, den durch die Abschätzungseinheit abgeschätzten Wärmebedarf mit den der aktuellen Außentemperatur und der aktuellen Wärmepumpentemperatur für verschiedene Drehzahleinstellungen des Verdichters zugeordneten Wärmepumpenleistungen zu vergleichen und diejenige Wärmepumpenleistung und die dazugehörige Drehzahleinstellung auszuwählen, welche dem abgeschätzten Wärmebedarf am meisten entspricht. Der Regler ist ferner dazu ausgestaltet, die Drehzahleinstellung des Verdichters entsprechend der Auswahl zu steuern.

Gemäß einem Aspekt der vorliegenden Erfindung weist der Regler eine Interpolationseinheit zum Durchführen einer Interpolation der Wärmepumpenleistungen in dem Kennfeld auf, wenn die Außentemperatur und/oder die Wärmepumpentemperatur nicht den in dem Kennfeld gespeicherten Werten entspricht.

Gemäß einem weiteren Aspekt der vorliegenden Erfindung weist der Regler einen PI-Regler auf, der als ein Eingangssignal eine Regelabweichung zwischen der Heizkreis-Solltemperatur und der Heizkreis-Isttemperatur aufweist. Das Ausgangssignal des PI-Reglers wird mit dem durch die Abschätzungseinheit abgeschätzten Wärmebedarf multipliziert, um einen korrigierten Wärmebedarf zu ermitteln, der für den Vergleich mit den Wärmepumpenleistungen in der Kennfeldeinheit verwendet wird.

Die Erfindung betrifft ebenfalls ein Verfahren zum Steuern einer Wärmepumpenvorrichtung, die einen Verdichter mit mindestens zwei Drehzahleinstellungen aufweist. Die Drehzahleinstellungen des Verdichters werden mittels eines Reglers eingestellt. Die jeweiligen Leistungen der Wärmepumpenvorrichtungen bei den zumindest zwei Drehzahleinstellungen des Verdichters werden für verschiedene Außentemperaturen und für verschiedene Wärmepumpentemperaturen gespeichert. Der Wärmebedarf eines zu beheizenden Gebäudes wird abgeschätzt. Der abgeschätzte Wärmebedarf wird mit den der aktuellen Außentemperatur und der aktuellen Wärmepumpentemperatur für verschiedene Drehzahleinstellungen zugeordneten Wärmepumpenleistungen verglichen. Diejenige Wärmepumpenleistung und die dazugehörige Drehzahleinstellung werden ausgewählt, welche dem abgeschätzten Wärmebedarf am meisten entspricht. Die Drehzahleinstellung des Verdichters wird entsprechend der Auswahl gesteuert.

Gemäß der Erfindung kann z. B. eine Luft-Wasser-Wärmepumpe mit dem natürlichen Kältemittel, z. B. Kohlendioxid, einem Warmwasser-Schichtspeicher und einem drehzahlgeregelten Verdichter vorgesehen werden. Hieraus ergibt sich eine Kombination, die vor allem im Neubau von besonderem wirtschaftlichem Vorteil ist.

Eine CO2-Wärmepumpe insbesondere mit Ejector-Technologie arbeitet besonders effizient bei einer verhältnismäßig großen Spreizung zwischen Vor- und Rücklauftemperatur. Dies kann in besonders vorteilhafter Weise genutzt werden, wenn die Warmwasserbereitung mit einem Schichtspeicher ausgeführt wird. Auf diese Weise können hohe Warmwassertemperaturen mit verhältnismäßig großen Leistungszahlen erzielt werden.

Erfindungsgemäß wird nun eine besonders effiziente Leistungsregelung des Verdichters über die Variation der Verdichterdrehzahl erreicht. Hierbei kann der Verdichter in drei Leistungsstufen betrieben werden, die über einen besonderen Algorithmus ausgewählt werden.

Weitere Ausgestaltungen der Erfindung sind Gegenstand der Unteransprüche. Vorteile und Ausführungsbeispiele der Erfindung werden nachstehend unter Bezugnahme auf die Zeichnung näher erläutert.

Fig. 1    zeigt ein Blockschaltbild eines Reglers für eine Wärmepumpenvorrich-tung gemäß einem ersten Ausführungsbeispiel,

Fig. 2    zeigt einen schematischen Aufbau einer Wärmepumpenvorrichtung gemäß einem zweiten Ausführungsbeispiel, und

Fig. 3    zeigt einen Graph zur Verdeutlichung des Zusammenhangs zwischen Heizleistung und Heizlast bei einer Wärmepumpe gemäß der Erfin-dung.

Gemäß der Erfindung kann ein Verdichter einer Wärmepumpenvorrichtung gemäß einem Ausführungsbeispiel der Erfindung durch ein erfindungsgemäßes Steuerverfahren angesteuert werden. Dies kann sich insbesondere auf die Drehzahl bzw. die Leistung des Verdichters beziehen.

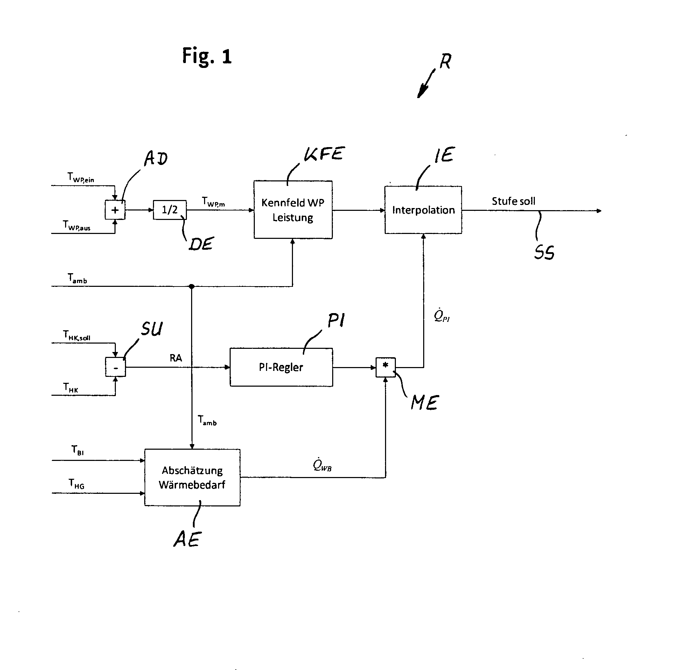

Fig. 1 zeigt ein Blockschaltbild eines Reglers für eine Wärmepumpenvorrichtung gemäß einem ersten Ausführungsbeispiel. Der Regler R weist als Eingangssignale die Außentemperatur $T_{amb}$, die Wärmepumpeneingangstemperatur $T_{wp,ein}$, die Wärmepumpenausgangstemperatur $T_{WP,aus}$, die Heizkreis-Solltemperatur $T_{HK,soll}$ und die Heizkreis-Isttemperatur $T_{HK}$, die Bivalenzpunkttemperatur $T_{BI}$ und die Heizgrenztemperatur $T_{HG}$ auf.

Der Regler R weist eine Kennfeldeinheit KFE, eine Interpolationseinheit IE, einen PI-Regler PI, eine Abschätzungseinheit AE, eine Addiereinheit AD, eine Subtraktionseinheit SU, eine Dividiereinheit DE und eine Multipliziereinheit ME auf. Der Regler R dient dazu, einen Verdichter V der Wärmepumpenvorrichtung zu steuern. Insbesondere dient der Regler R dazu, eine der Leistungsstufen des Verdichters V einzustellen. Vorzugsweise weist der Verdichter gemäß dem ersten Ausführungsbeispiel mehrere, beispielsweise drei Leistungsstufen auf. Das Ausgangssignal SS des Reglers dient der Einstellung der gewünschten Leistungsstufe an dem Verdichter V.

Zur Bestimmung der entsprechenden Leistungsstufe des Verdichters V wird zunächst der geschätzte Wärmebedarf $Q_{WB}$ des Hauses bestimmt:

Basierend auf dem linearen Verlauf des Wärmebedarfs z. B. eines Hauses zwischen der Bivalenzpunkttemperatur $T_B$, (beispielsweise 5 kW) und Heizgrenztemperatur $T_{HG}$ (0 kW) wird der Heizwärmebedarf $Q_{WB}$ in Abhängigkeit der Außentemperatur $T_{amb}$ in der Abschätzungseinheit AE berechnet.

$$\dot{Q}_{WB} = 5 - \frac{-5}{T_{HG} - T_{BI}} \cdot (T_{amb} - T_{HG})$$

Eine Regelabweichung RA zwischen Heizkreis-Ist-Temperatur $T_{HK}$ und Heizkreis-Solltemperatur $T_{HK,soll}$ kann mittels der Subtrahiereinheit SU durch Subtrahieren der Istvon der Soll-Temperatur ermittel werden. Die Differenz zwischen der Heizkreis-Solltemperatur $T_{HK,soll}$ und der Heizkreis-Isttemperatur $T_{HK}$ dient einem PI-Regler PI als Regelabweichung RA. Der Proportionalanteil $P_Q$ und der Integralanteil $I_Q$ des PI-Reglers sind optional parametrierbar.

Der Ausgang $P_{out}$ des Proportional-Reglers berechnet sich wie folgt:

$$P_{out} = f_{(RA)}$$

Der Ausgang des Integral-Reglers $I_{out}$ berechnet sich mit der Anzahl n an Integraldurchläufen pro Minute:

$$I_{out.n+1} = f_{(RA.I_{out\,n})}$$

In der Multipliziereinheit ME wird der Ausgang des PI-Reglers wird mit dem Heizwärmebedarf $Q_{WB}$ multipliziert und gibt den korrigierten Heizwärmebedarf $Q_{PI}$ aus:

$$\dot{Q}_{PI} = P_{out} \times I_{out} \times \dot{Q}_{WB}$$

Die mittlere Wärmepumpentemperatur $T_{WP,m}$ wird bestimmt. Die mittlere Wärmepumpentemperatur $T_{WP,m}$ wird durch Addieren der Wärmepumpen-Vorlauftemperatur und der Wärmepumpen-Rücklauftemperatur in der Addiereinheit und durch Dividieren des Ergebnisses durch zwei in der Divisionseinheit DE erhalten. Damit entspricht die mittlere Wärmepumpentemperatur $T_{WP,m}$:

$$T_{WP,Mittel} \ (T_{WP,Mittel} = 0{,}5 \ (T_{WP,VL} + T_{WP,RL})$$

Die mittlere Wärmepumpentemperatur $T_{WP,m}$ wird zusammen mit der außerhalb des Gebäudes gemessenen Außenlufttemperatur $T_{amb}$ verwendet, um über ein Kennfeld der Wärmepumpenleistung, die in der Kennfeldeinheit KFE gespeichert ist, die erzielbare Wärmepumpenleistung zu bestimmen. In dem in der Tabelle 1 gezeigten Kennfeld ist jedem Wertepaar bestehend aus der mittleren Wärmepumpentemperatur und der Außentemperatur eine Wärmepumpenleistung zugeordnet.

Das Kennfeld kann beispielsweise die in der Tabelle 1 dargestellte Form aufweisen.

**Tabelle 1**

| Drehzahlstufe 1 | Low | (45H) | | | | | | | |
|---|---|---|---|---|---|---|---|---|---|
| | Außentemperatur $T_{amb}$ | | | | | | | | |
| Mittlere WP-Temperatur | -20 | -15 | -10 | -5 | 0 | 5 | 10 | 15 | 20 |
| 30 | 4.3 | 4.45 | 4.35 | 3.85 | 3.2 | 3.5 | 3.65 | 4.1 | 4.3 |
| 40 | 3.5 | 3.55 | 3.5 | 2.95 | 2.45 | 2.6 | 2,95 | 3.25 | 3.5 |
| 50 | 2.7 | 2.85 | 2.7 | 2.15 | 1.7 | 1.85 | 2.1 | 2.3 | 2.5 |
| Temperaturdifferez: 10 K | | | | | | | | | |
| Drehzahlstufe 2 | Middle | (55H) | | | | | | | |
| | Außentemperatur | | | | | | | | |
| Mittlere WP-Temperatur | -20 | -15 | -10 | -5 | 0 | 5 | 10 | 15 | 20 |
| 30 | 4,3 | 4,5 | 4,5 | 4,4 | 4,1 | 3,9 | 4,0 | 4.1 | 4.3 |
| 40 | 35 | 3.55 | 3.7 | 3.5 | 3.1 | 3.0 | 3.05 | 3.25 | 3.5 |
| 50 | 2.7 | 2.85 | 2.8 | 2.65 | 2.35 | 2.25 | 2.25 | 2.3 | 2.5 |
| Temperaturdifferez: 10 K | | | | | | | | | |
| Drehzahlstufe 3 | High | (60H) | | | | | | | |
| | Außentemperatur | | | | | | | | |
| Mittlere WP-Temperatur | -20 | -15 | -10 | -5 | 0 | 5 | 10 | 15 | 20 |
| 30 | 4.6 | 4.8 | 4.9 | 5.0 | 5.0 | 5.0 | 5.0 | 5.2 | 5.4 |
| 40 | 3.8 | 3.9 | 4.0 | 4,0 | 3,8 | 3,75 | 3,9 | 4,2 | 4.5 |
| 50 | 3.05 | 3.2 | 3.25 | 3.2 | 3.1 | 3.0 | 3.1 | 3.2 | 3.3 |
| Temperaturdifferez: 10 K | | | | | | | | | |

Da die in der Tabelle 1 gezeigten Kennfelder sich lediglich auf die mittleren Wärmepumpentemperaturen 30, 40 und 50°C sowie auf die Außentemperaturen -20, -15, -10, -5, 0, 5, 10, 15, 20°C beziehen und sowohl die tatsächliche mittlere Wärmepumpentemperatur als auch die tatsächliche Außentemperatur nicht notwendigerweise diesen Werten entsprechen, kann eine Interpolation in der Interpolationseinheit IE durchgeführt werden.

Zur Bestimmung der geforderten Leistungsstufe der Wärmepumpe wird hierzu in der Interpolationseinheit IE in einem ersten Schritt innerhalb der einzelnen Stufe die erreichbare Leistung in Abhängigkeit der mittleren Wärmepumpentemperatur $T_{WPm}$ zwischen den einzelnen Leistungskurven linear interpoliert. In einem zweiten Schritt wird für alle drei Leistungskurven innerhalb des im vorherigen Interpolationsschrittes errechneten Leistungsverlaufes noch einmal in Abhängigkeit der Außentemperatur $T_{amb}$ interpoliert. Es wird diejenige Leistungsstufe 1,2 oder 3 gewählt, deren in den vorherigen Schritten berechnete Leistung am nächsten zum korrigierten Heizwärmebedarf $Q_{PI}$ liegt.

Falls die Leistungswerte im WP-Kennfeld für Stufe 1 und Stufe 2 gleich sind, kann die Leistungsstufe 1 gewählt werden.

Der Brauchwassererwärmungsmodus wird hingegen immer in der maximalen Stufe betrieben, um eine entsprechende Erwärmung des Wassers zu ermöglichen.

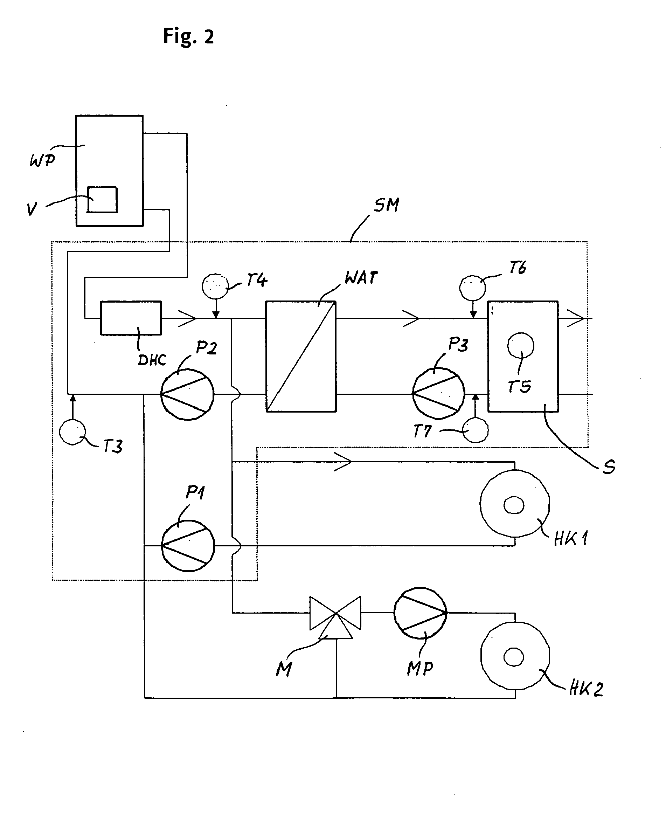

Fig. 2 zeigt eine schematische Darstellung einer Wärmepumpenvorrichtung gemäß einem zweiten Ausführungsbeispiel. Die Wärmepumpenvorrichtung gemäß dem zweiten Ausführungsbeispiel weist eine Wärmepumpe WP; ein Speichermodul SM, einen ersten Heizkreis HK1 und optional einen zweiten Heizkreis HK2 auf. In dem zweiten Heizkreis HK2 kann ein Mischer M und eine Mischerkreispumpe MP vorgesehen sein.

Das Speichermodul SM kann einen Speicher S (z. B. einen Schichtspeicher), eine erste, zweite und dritte Pumpe P1 - P3, eine elektrische Nachheizstufe DHC und einen Wärmetauscher WAT aufweisen. In dem Speichermodul können ferner fünf Temperatursensoren T3, T4, T5, T6, T7 vorgesehen sein.

Im Heizbetrieb ist die Heizkreispumpe P1 in Betrieb, die ein Wärmeträgermedium durch den Heizkreis HK1 (z.B. eine Radiatorenheizung) fördert und dem optional außen aufgestellten Wärmepumpenmodul WP zuführt. Hierbei wird die Heizungs-Rücklauftemperatur T3 mit einem ersten Temperatursensor T3 erfasst, ebenso wie die Wärmepumpenvorlauftemperatur T4, welche durch den zweiten Temperatursensor T4 erfasst werden. Mittels der elektrischen Nachheizstufe DHC kann bei nicht ausreichender Wärmepumpenleistung mittels Heizstäben elektrisch zugeheizt werden. Optional ist ein zweiter Heizkreis (z.B. eine Fußbodenheizung mit niedrigerer Heizkreissolltemperatur) HK2 vorgesehen, der über eine Mischerkreispumpe MP angetrieben wird und dessen Temperatur mittels getaktetem Mischerventil M auf ein niedrigeres Niveau eingestellt werden kann.

Im Warmwasserbetrieb sind die Heizkreispumpe P1 sowie die Mischerkreispumpe MP ausgeschaltet. Nun fördert eine zweite Heizkreispumpe P2 das Wärmeträgermedium durch die Wärmepumpe WP und die elektrische Nachheizstufe DHC über einen Wärmeaustauscher WAT. Auf der anderen Seite des WAT wird Trinkwasser aus einem Speicher S mit einer Trinkwasserpumpe (dritte Pumpe) P3 gefördert. Der Trinkwasserspeicher S ist hierbei optional als Schichtspeicher ausgeführt, so dass die Speicherrücklauftemperatur T7 (durch den fünften Temperatursensor T7 erfasst) über einen längeren Zeitraum konstant niedrig ist (insbesondere entspricht sie der Leitungskaltwassertemperatur). Durch die Realisierung sehr kleiner Volumenströme mit einer speziellen Pumpenregelung kann eine konstant hohe Speichervorlauftemperatur T6 erzielt werden. Der Speicher S wird nun so lange von oben mit heißem Wasser beschichtet, bis die mit einem Temperatursensor T5 im unteren Drittel des Speichers gemessene Speichertemperatur T5 der Speichersolltemperatur entspricht. Auf diese Weise kann eine besonders effiziente Schichtladung realisiert werden, bei der die CO2-Wärmepumpe optimal genutzt werden kann.

Der Regler gemäß dem ersten Ausführungsbeispiel kann bei der Wärmepumpenvorrichtung gemäß dem zweiten Ausführungsbeispiel verwendet werden, um die Wärmepumpenvorrichtung zu steuern.

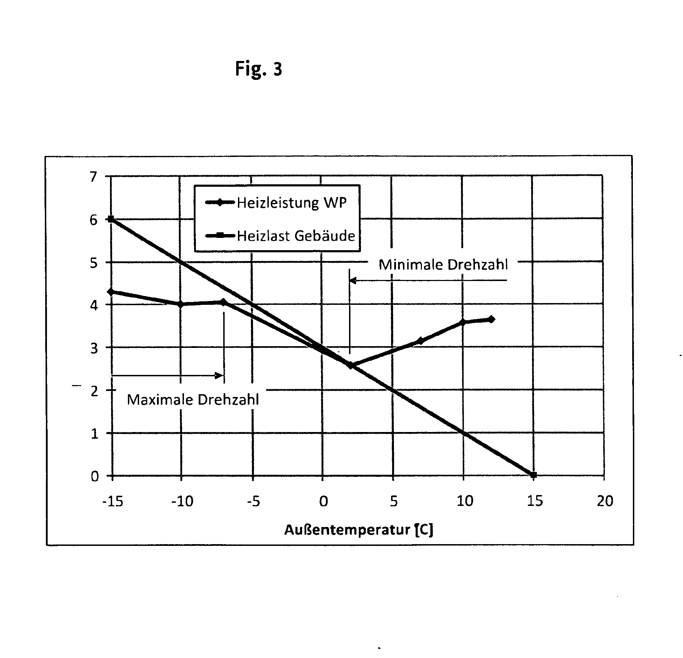

Fig. 3 zeigt einen Graphen zur Verdeutlichung des Zusammenhangs zwischen Heizleistung und Heizlast bei einer Wärmepumpe gemäß der Erfindung. Während die Heizlast des Gebäudes bei zunehmender Außentemperatur sinkt, wird die Heizleistung der Wärmepumpe zwischen der maximalen Drehzahl und der minimalen Drehzahl des Verdichters bei zunehmender Außentemperatur reduziert. Wenn jedoch die Außentemperatur weiter ansteigt, dann steigt auch die Heizleistung der Wärmepumpe an.

**Patentansprüche**

1.  Wärmepumpenvorrichtung, mit
    einem Verdichter (V) mit mindestens zwei Drehzahleinstellungen,
    einem Regler (R) zum Einstellen der Drehzahleinstellungen des Verdichters (V), wobei der Regler (R) eine Kennfeldeinheit (KFE), welche die jeweilige Leistung der Wärmepumpenvorrichtung (WP) bei den mindestens zwei Drehzahleinstellungen des Verdichters (V) für verschiedene Außentemperaturen ($T_{amb}$) und für verschiedene Wärmepumpentemperaturen ($T_{WP,m}$) speichert, und eine Abschätzungseinheit (AE) zum Abschätzen des Wärmebedarfs ($Q_{wB}$) eines zu beheizenden Gebäudes aufweist,
    wobei der Regler (R) dazu ausgestaltet ist, den durch die Abschätzungseinheit (AE) abgeschätzten Wärmebedarf ($Q_{wB}$) mit den der aktuellen Außentemperatur ($T_{amb}$) und der aktuellen Wärmepumpentemperatur ($T_{WPm}$) für verschiedene Drehzahleinstellungen zugeordneten Wärmepumpenleistungen zu vergleichen und diejenige Wärmepumpenleistung und die dazugehörende Drehzahleinstellung auszuwählen, welche dem abgeschätzten Wärmebedarf ($Q_{wB}$) am meisten entspricht,
    wobei der Regler (R) dazu ausgestaltet ist, die Drehzahleinstellung des Verdichters entsprechend der Auswahl zu steuern.

**2.** Wärmepumpenvorrichtung nach Anspruch 1, wobei der Regler eine Interpolationseinheit (IE) zum Durchführen einer Interpolation der Wärmepumpenleistungen in dem Kennfeld aufweist, wenn die Außentemperatur und/oder die Wärmepumpentemperatur nicht den in dem Kennfeld gespeicherten Werten entspricht.

**3.** Wärmepumpenvorrichtung nach Anspruch 1 oder 2, wobei der Regler aufweist:

einen PI-Regler, der als ein Eingangssignal eine Regelabweichung zwischen der Heizkreis-Solltemperatur und der Heizkreis-Isttemperatur aufweist,
wobei das Ausgangssignal des PI-Regiers mit dem durch die Abschätzungseinheit (AE) abgeschätzten Wärmebedarfs multipliziert wird, um einen korrigierten Wärmebedarf zu ermitteln, der für den Vergleich mit den Wärmepumpenleistungen in der Kennfeldeinheit (KFE) verwendet wird.

**4.** Verfahren zum Steuern einer Wärmepumpenvorrichtung mit einem Verdichter mit mindestens zwei Drehzahleinstellungen, mit den Schritten:

Speichern von Leistungen der Wärmepumpenvorrichtungen bei den zumindest zwei Drehzahleinstellungen des Verdichters (V) für verschiedene Außentemperaturen ($T_{amb}$) und für verschiedene Wärmepumpentemperaturen ($T_{WP,m}$) in einer Kennfeldeinheit (KFE),
Abschätzen des Wärmebedarfs ($Q_{wB}$) eines zu beheizenden Gebäudes,
Vergleichen des abgeschätzten Wärmebedarfs mit den der aktuellen Außentemperatur und der aktuellen Wärmepumpentemperatur für verschiedene Drehzahleinstellungen zugeordneten Wärmepumpenleistungen, und
Auswählen derjenigen Wärmepumpenleistung und der dazugehörigen Drehzahleinstellung, welche dem abgeschätzten Wärmebedarf am meisten entspricht, und
Steuern der Drehzahleinstellung des Verdichters entsprechend der Auswahl.

## Fig. 1

$R$

$T_{WP,ein}$

$AD$

$KFE$

$IE$

$T_{WP,aus}$

$+$ → $1/2$ → $T_{WP,m}$ → Kennfeld WP Leistung → Interpolation → Stufe soll

$DE$

$SS$

$T_{amb}$

$T_{HK,soll}$

$SU$

$PI$

$\dot{Q}_{PI}$

$-$ → RA → PI-Regler → $*$

$T_{HK}$

$ME$

$T_{amb}$

$T_{BI}$

$T_{HG}$

Abschätzung Wärmebedarf → $\dot{Q}_{WB}$

$AE$

# Fig. 2

# Fig. 3

**Europäisches Patentamt**
**European Patent Office**
**Office européen des brevets**

## EUROPÄISCHER RECHERCHENBERICHT

Nummer der Anmeldung

EP 11 00 4538

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 43 39 880 A1 (KULMBACHER KLIMAGERAETE [DE]) 24. Mai 1995 (1995-05-24)<br>* das ganze Dokument *<br>----- | 1-4 | INV.<br>F24D19/10<br>F25B49/02<br>F25B30/02 |
| X | JP 2004 116891 A (DAIKIN IND LTD) 15. April 2004 (2004-04-15)<br>* Zusammenfassung; Abbildungen 1,2,3; Tabellen 1,2 *<br>----- | 1-4 | |
| X | DE 25 09 319 A1 (BOSCH GMBH ROBERT) 16. September 1976 (1976-09-16)<br>* Seite 3, Absatz 6 - Seite 4, Absatz 3; Abbildungen 1,2 *<br>----- | 1-4 | |
| X | US 5 081 846 A (DUDLEY KEVIN F [US] ET AL) 21. Januar 1992 (1992-01-21)<br>* Spalte 3, Zeile 13 - Spalte 4, Zeile 60; Anspruch 1; Abbildungen 1,2, *<br>----- | 1-4 | |
| A | DE 29 22 614 A1 (VOGEL PUMPEN) 20. Dezember 1979 (1979-12-20)<br>* Seite 6, Absatz 3 - Seite 8, Absatz 1; Anspruch 1; Abbildungen 1-3 *<br>----- | 1-4 | RECHERCHIERTE SACHGEBIETE (IPC)<br><br>F24D<br>F25B |

Der vorliegende Recherchenbericht wurde für alle Patentansprüche erstellt

| Recherchenort | Abschlußdatum der Recherche | Prüfer |
|---|---|---|
| München | 25. Oktober 2011 | Gasper, Ralf |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 11 00 4538

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-10-2011

| Im Recherchenbericht angeführtes Patentdokument | | Datum der Veröffentlichung | Mitglied(er) der Patentfamilie | | Datum der Veröffentlichung |
|---|---|---|---|---|---|
| DE 4339880 | A1 | 24-05-1995 | EP<br>NO | 0655590 A1<br>944455 A | 31-05-1995<br>24-05-1995 |
| JP 2004116891 | A | 15-04-2004 | JP | 3855902 B2 | 13-12-2006 |
| DE 2509319 | A1 | 16-09-1976 | KEINE | | |
| US 5081846 | A | 21-01-1992 | CA<br>JP | 2048262 A1<br>4244558 A | 22-03-1992<br>01-09-1992 |
| DE 2922614 | A1 | 20-12-1979 | AT<br>CH | 374914 B<br>643348 A5 | 12-06-1984<br>30-05-1984 |

EPO FORM P0461

Für nähere Einzelheiten zu diesem Anhang : siehe Amtsblatt des Europäischen Patentamts, Nr.12/82